# EUROPÄISCHE PATENTANMELDUNG

(11) **EP 4 039 532 A1**
(43) Veröffentlichungstag der Anmeldung: **10.08.2022**
(21) Anmeldenummer: 21020538.1
(22) Anmeldetag: 02.11.2021
(51) Int. Cl.: B60L 53/66, B60L 53/302, B60L 53/62, B60L 53/10, B60L 53/18

(54) **GLEICHSTROM-LADESÄULE UND VERFAHREN ZUM LADEN EINER BATTERIE EINES KRAFTFAHRZEUGS**

(30) Priorität: 09.02.2021 DE 102021102971
(71) Anmelder: Dr. Ing. h.c. F. Porsche AG, 70435 Stuttgart (DE)
(72) Erfinder: Heyne, Raoul, 75446 Wiernsheim (DE); Massierer, Timo, 71638 Ludwigsburg (DE)

(57) **Zusammenfassung**

Verfahren zum Laden einer Batterie (7) und Gleichstrom-Ladesäule (2) dafür, umfassend einen ersten Leiter (22), der eine leitende Verbindung zwischen einem ersten Stromversorgungsanschluss (18) einer Spannungsversorgung (16) und einem ersten Leiterkabel (30) eines Ladekabels (10) herstellt, einen zweiten Leiter (24), der eine leitende Verbindung zwischen einem zweiten Stromversorgungsanschluss (20) der Spannungsversorgung (16) und einem zweiten Leiterkabel (32) des Ladekabels (10) herstellt, wobei das Ladekabel (10) mittels einer Kühlflüssigkeit (63) kühlbar ist, eine Auswerteeinrichtung (46), die ausgebildet ist, mittels eines Sensors (58, 60) ein erstes Signal zu erfassen, das eine Temperatur zumindest eines der beiden Leiterkabel (30, 32) repräsentiert, eine Messeinrichtung (44, 47), die ausgebildet ist, ein zweites Signal bereitzustellen, das mittels der Auswerteeinrichtung (46) erfassbar ist und das eine elektrische Größe am ersten Leiter (22) repräsentiert, die auf eine Verlustenergie am ersten Leiter (30) rückschließen lässt, wobei die Auswerteeinrichtung (46) ausgebildet ist, die Verlustenergie am ersten Leiter (30) und eine Verlustenergie an beiden Leiterkabeln (30, 32) unter Berücksichtigung mindestens dieser Signale zu berechnen und abhängig von beiden Verlustenergien eine Verlustenergie bis zu einer Ladekupplung (8) zu bestimmen.

## Beschreibung

Die Erfindung betrifft gemäß Oberbegriff von Patentanspruch 1 eine Gleichstrom-Ladesäule für Kraftfahrzeuge. Ferner betrifft die Erfindung gemäß dem Oberbegriff von Patentanspruch 11 ein Verfahren zum Laden einer Batterie eines Kraftfahrzeugs.

DE 10 2017 221 298 A1 offenbart bereits eine Messvorrichtung zur Erfassung einer von einer Ladesäule übergebenen elektrischen Energie. Die Ladesäule weist ein Ladekabel zur Ausbildung einer elektrischen Verbindung zwischen einem Anschlusspunkt des Ladekabels an der Ladesäule und einem Übergabepunkt des Ladekabels auf, an dem Ladung an das Kraftfahrzeug bzw. dessen Batterie abgegeben wird. Das Ladekabel umfasst eine Leitergarnitur mit zwei Leitern. Die Messvorrichtung
umfasst:
- eine erste Messeinheit zur Messung einer ersten elektrischen Leistung an die beiden Leiter im Anschlusspunkt;
- eine zweite Messeinheit zur Messung zumindest einer zweiten elektrischen Größe am Anschlusspunkt; und
- eine Bestimmungseinheit zur Bestimmung eines Blindleistungsanteils aus der zweiten elektrischen Größe und zur Bestimmung der am Übergabepunkt übergebenen elektrischen Energie anhand der um den Blindleistungsanteil kompensierten ersten elektrischen Leistung.

Aufgabe der Erfindung ist es, eine Gleichstrom-Ladesäule und ein Verfahren zum Laden einer Batterie eines Fahrzeugs zu schaffen, die/das eine exakte Abrechnung der von einem Benutzer in sein Fahrzeug eingespeisten Energie ermöglicht.

Diese Aufgabe wird durch die Vorrichtung und das Verfahren nach den unabhängigen Ansprüchen gelöst.

Die Gleichstrom-Ladesäule für Kraftfahrzeuge umfasst: einen ersten Leiter, der eine leitende Verbindung zwischen einem ersten Stromversorgungsanschluss einer Spannungsversorgung und einem ersten Leiterkabel eines Ladekabels herstellt, einen zweiten Leiter, der eine leitende Verbindung zwischen einem zweiten Stromversorgungsanschluss der Spannungsversorgung und einem zweiten Leiterkabel des Ladekabels herstellt, wobei das Ladekabel mittels einer Kühlflüssigkeit kühlbar ist, eine Auswerteeinrichtung, die ausgebildet ist, mittels eines Sensors ein erstes Signal zu erfassen, das eine Temperatur zumindest eines der beiden Leiterkabel repräsentiert, eine Messeinrichtung, die ausgebildet ist, ein zweites Signal bereitzustellen, das mittels der Auswerteeinrichtung erfassbar ist und das eine elektrische Größe am ersten Leiter repräsentiert, die auf eine Verlustenergie am ersten Leiter rückschließen lässt, wobei die Auswerteeinrichtung ausgebildet ist, die Verlustenergie am ersten Leiter und eine Verlustenergie an beiden Leiterkabeln unter Berücksichtigung mindestens dieser Signale zu berechnen und abhängig von beiden Verlustenergien eine Verlustenergie bis zu einer Ladekupplung zu bestimmen.

Damit wird es ermöglicht, Gleichstrom und Gleichspannung insbesondere bei Schnellladesäulen mit großen DC-Leistungen präzise zu messen, um die Energie zu bestimmen und diese abrechnen zu können. Es können hohe Ströme von bis zu 500 A und hohe Spannungen von bis zu 1000 V gemessen werden. Die Verlustenergie kann bis zu einer Ladebuchse sehr genau bestimmt werden.

Die Gleichstrom-Ladesäule weist somit die Auswerteeinrichtung auf, die auf einer sehr genauen Energiemessung beruht, jedoch ebenfalls in der Lage ist, auch die Verlustenergie zu berücksichtigen. Damit können alle abrechnungsrelevanten Messungen und Berechnungen auf einer nötigenfalls geeichten Gleichstrom-Ladesäule erfolgen.

Um die Verlustenergie über die gesamte Länge des Ladekabels zu berücksichtigen, kann vorgesehen sein, dass der erste Sensor ein Temperatursensor ist, der ausgebildet ist, eine Kühlflüssigkeitstemperatur in einem Vorlauf und/oder einem Rücklauf eines Fluidkreislaufs der Kühlflüssigkeit zu messen.

Bei einer kostengünstigen und leicht zu montierenden bzw. anzuschließenden Gleichstrom-Ladesäule ist vorgesehen, dass die beiden Leiter jeweils ein Leiterteil aufweisen, das starrer ist als die Leiterkabel und das als Leiterschiene, Leiterrohr oder Leiterstange insbesondere aus Kupfer ausgeführt ist.

Um trotz der starren Bauweise Toleranzen und thermische Ausdehnungen im Betrieb der Gleichstrom-Ladesäule berücksichtigen zu können, kann vorgesehen sein, dass die beiden Leiter jeweils zusätzlich ein Zwischenkabel aufweisen, das eine leitende Verbindung zwischen dem starren Leiterteil einerseits und dem Leiterkabel andererseits herstellt.

Da für die Berechnung der Verlustenergie sehr hohe Ströme von bis zu 500 A zu messen sind, kann ein Shunt vorgesehen sein. Dabei kann die Messeinrichtung einen Widerstand und eine parallel zu demselben geschaltete Spannungsmesseinrichtung aufweisen, sodass die elektrische Messgröße von der Spannung gebildet wird, die an dem Widerstand abfällt.

Alternativ kann anstelle der Spannung die Stromstärke unmittelbar im Leiter gemessen werden, wobei ein parallel geschalteter Nebenschlusswiderstand vorgesehen ist.

Bei einer die Verlustenergie besonders genau ermittelnden Gleichstrom-Ladesäule ist vorgesehen, dass ein unteres Ende des ersten Leiters von dem ersten Stromversorgungsanschluss gebildet wird und dass ein oberes Ende des ersten Leiters von einem Übergabepunkt gebildet wird, an dem der erste Leiter an das erste Leiterkabel angeschlossen ist. Somit kann die Verlustenergie bis zu den Übergabepunkten von den Leitern zum Ladekabel genau berechnet werden. Ab diesem Übergabepunkt wird die Verlustenergie aufgrund der Temperatur im Ladekabel berechnet.

Um die Spannung zwischen den beiden Leitern zu berücksichtigen und anzuzeigen, kann vorgesehen sein, dass eine Spannungsmesseinrichtung an den beiden Leitern angeschlossen ist und ausgebildet ist, ein Signal bereitzustellen, das die Spannung zwischen den beiden Leitern repräsentiert und das von der Auswerteeinrichtung erfassbar ist.

Überdies kann vorgesehen sein, dass die beiden Leiter und ein Innenraumtemperatursensor innerhalb eines Außengehäuses der Gleichstrom-Ladesäule angeordnet sind, und dass der Innenraumtemperatursensor ausgebildet ist, ein Signal bereitzustellen, das durch die Auswerteeinrichtung erfassbar ist, und dass die Auswerteeinrichtung ausgebildet ist, die Verlustenergie unter Berücksichtigung des Signals des Innenraumtemperatursensors zu berechnen.

Die Verlustenergie des Ladekabels kann zusätzlich zur Ermittlung durch die Kühlflüssigkeitstemperatur oder auch stattdessen dadurch ermittelt werden, dass zumindest ein Temperatursensor innerhalb des Ladekabels an zumindest einem der Leiterkabel angeschlossen ist; und ausgebildet ist, die Temperatur des zumindest einen der Leiterkabel zu messen und ein diese Temperatur repräsentierendes Signal bereitzustellen, und dass die Auswerteeinrichtung ausgebildet ist, dieses die Temperatur repräsentierende Signal zu erfassen und bei der Berechnung der Verlustenergie zu berücksichtigen.

In vorteilhafter Weise kann die Erwärmung eines Innenraumes innerhalb eines Außengehäuses der Gleichstrom-Ladesäule berücksichtigt werden. Dies erfolgt vorzugsweise nur dann, wenn diese Energiemenge größer ist als die von der Auswerteeinrichtung berechnete Verlustenergie in den Leitungen, die vorzugsweise aus Kupfer bestehen. Bei der Berechnung der Verlustenergie unter Berücksichtigung der Erwärmung im Innenraum des Außengehäuses ist die Erwärmung durch die äußere Einstrahlung von der Sonne herauszurechnen. Dazu kann diese Erwärmung beispielsweise anhand eines Signals des Helligkeitssensors ermittelt werden, der für eine Anzeige eines Kreditkartenleseautomaten oder eine sonstige Anzeige der Gleichstrom-Ladesäule vorgesehen ist.

Mithin kann eine Erfassungseinrichtung vorgesehen sein, mit der die Erwärmung durch die Witterung, insbesondere die Sonneneinstrahlung und/oder die Außentemperatur erfassbar ist wobei die Auswerteeinrichtung ausgestaltet ist, die Verlustleistung unter Berücksichtigung des Signals der Erfassungseinrichtung zu berechnen.

Die Erfindung betrifft ferner ein Verfahren zum Laden einer Batterie eines Kraftfahrzeugs mittels einer Gleichstrom-Ladesäule. Dabei ist vorgesehen, dass zum Laden eine Ladekupplung eines Ladekabels der Gleichstrom-Ladesäule mit einer Ladebuchse des Kraftfahrzeugs gekuppelt wird, um die Batterie über
- die Ladekupplung;
- Leiterkabel innerhalb des Ladekabels; und
- zumindest zwei Leiter
mit einer Spannungsversorgung zu verbinden,
dass eine Verlustenergie von der Spannungsversorgung zur Ladekupplung mittels einer Berechnung ermittelt wird, in der eine elektrische Messgröße einer der Leiter und eine Temperatur einer Kühlflüssigkeit berücksichtigt wird, mit der das Ladekabel gekühlt wird.

Weitere vorteilhafte Ausgestaltungen ergeben sich aus der folgenden Beschreibung und der Zeichnung.

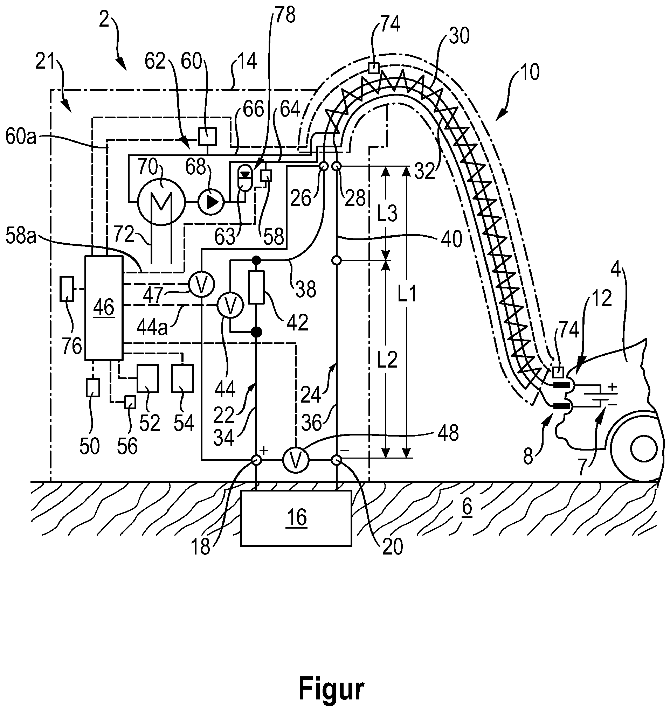

In der Zeichnung zeigt
Figur 1 schematisch eine Gleichstrom-Ladesäule.

In der Zeichnung ist eine Gleichstrom-Ladesäule 2 für ein Kraftfahrzeug 4 dargestellt. Die Gleichstrom-Ladesäule 2 steht neben dem Kraftfahrzeug 4 auf dem Boden 6.

Zum Laden einer Batterie 7 des Kraftfahrzeugs 4 ist eine Ladekupplung 8 eines Ladekabels 10 der Gleichstrom-Ladesäule 2 mit einer Ladebuchse 12 des Kraftfahrzeugs 4 gekuppelt, die elektrisch an die Batterie 7 angeschlossen ist, die innerhalb des Kraftfahrzeugs 4 angeordnet ist und den elektromotorischen Antrieb des Kraftfahrzeugs 4 mit Strom versorgen kann.

Nachstehend wird die Gleichstrom-Ladesäule 2 näher erläutert.

Die Gleichstrom-Ladesäule 2 weist ein geerdetes Außengehäuse 14 auf, das auf dem Boden 6 steht und das an eine nur schematisch dargestellte Stromversorgung 16 angeschlossen ist. Die Stromversorgung 16 weist zwei Stromversorgungsanschlüsse 18, 20 auf, die am Ende eines Erdkabels angeordnet sind, das aus dem Boden 6 heraus in einen Innenraum 21 des Außengehäuses 14 ragt. Der eine Stromversorgungsanschluss 18 ist an einem positiven Pol der Stromversorgung 16 angeschlossen. Hingegen ist der andere Stromversorgungsanschluss 20 an einen negativen Pol der Stromversorgung 16 angeschlossen.

Bei der Stromversorgung 16 kann es sich beispielsweise um einen Energiespeicher oder einen Wandler handeln, der Wechselstrom aus dem Stromnetz in Gleichstrom wandelt.

An die Stromversorgungsanschlüsse 18, 20 sind zwei Leiter 22, 24 angeschlossen, die sich im Innenraum 21 über eine Länge L1 von unten nach oben bis zu Übergabepunkten 26, 28 erstrecken, an denen zwei Leiterkabel 30, 32 des Ladekabels 10 angeschlossen sind. Jeder der beiden Leiter 22, 24 weist einen unteren Leiterteil 34 bzw. 36 und ein mit demselben leitend verbundenes Zwischenkabel 38 bzw. 40 auf, das die Verbindung zu dem jeweiligen Leiterkabel 30 bzw. 32 des Ladekabels 10 herstellt. Die unteren Leiterteile 34, 36 sind als starre Leiterschienen aus Kupfer ausgeführt. Stattdessen könnten die unteren Leiterteile 34, 36 aber auch als Leiterrohre oder als Leiterstangen ausgeführt sein.

Die unteren Leiterteile 34, 36 erstrecken sich jeweils über eine Länge L2, die länger ist als eine Länge L3, über die sich die Zwischenkabel 38, 40 erstrecken. Die beiden unteren Leiterteile 34, 36 brauchen nicht unbedingt die gleiche Länge L2 aufweisen, sondern können auch unterschiedlich lang sein. Die Zwischenkabel 38, 40 brauchen ebenfalls nicht die gleiche Länge L3 aufweisen, sondern können auch unterschiedlich lang sein.

In den einen Leiter 22 ist ein Shunt bzw. ein niederohmiger Strommesswiderstand 42 eingefügt. Der Strom messwiderstand 42 ist in der Zeichnung einerseits an das eine Zwischenkabel 38 und andererseits an das eine untere Leiterteil 34 angeschlossen, das dem positiven Pol zugordnet ist. Der Strommesswiderstand 42 kann alternativ auch in das untere Leiterteil 34 "geklemmt" sein, d.h. der Strommesswiderstand 42 ist in diesem Fall an einem Ende des unteren Leiterteils 34 elektrisch angeschlossen, das dazu aufgetrennt ist und beispielsweise als Leiterschiene aus Kupfer ausgeführt sein kann.

Unmittelbar stromauf und stromab des Strommesswiderstandes 42 sind Anschlüsse einer ersten Spannungsmesseinrichtung 44 leitend angeschlossen, sodass die erste Spannungsmesseinrichtung 44 den Spannungsabfall über den Strommesswiderstand 42 messen kann. Dieser Spannungsabfall ist eine elektrische Größe. Die erste Spannungsmesseinrichtung 44 gibt ein diesen Spannungsabfall repräsentierendes Signal über eine Signalleitung 44a an eine Auswerteeinrichtung 46 aus.

Es ist eine zweite Spannungsmesseinrichtung 47 vorgesehen, die zwei Anschlüsse aufweist. Einer der beiden Anschlüsse ist an den einen Stromversorgungsanschluss 18 angeschlossen, wohingegen der andere Anschluss an den einen Übergabepunkt 26 angeschlossen ist, sodass mit der zweiten Spannungsmesseinrichtung 47 die Spannung bzw. der Spannungsabfall über den gesamten einen Leiter 22 bzw. über die gesamte Länge L1 des einen Leiters 22 gemessen werden kann. Die zweite Spannungsmesseinrichtung 47 gibt ein diesen Spannungsabfall repräsentierendes Signal an eine Auswerteeinrichtung 46 aus. Dieser Spannungsabfall ist ebenfalls eine elektrische Größe.

Es ist eine dritte Spannungsmesseinrichtung 48 vorgesehen, die an den beiden Leitern 22, 24 angeschlossen ist und ein die Spannung zwischen den beiden Leitern 22, 24 repräsentierendes Signal an die Auswerteeinrichtung ausgibt.

Die Auswerteeinrichtung erhält außerdem ein Signal eines Innenraumtemperatursensors 50, der im Innenraum 21, d.h. innerhalb des Außengehäuses 14 angeordnet ist.

In das Außengehäuse 14 ist eine Anzeige 52 eingesetzt, die den Benutzer der Gleichstrom-Ladesäule 2 beispielsweise über einen Ladezustand und Zahlungsmodalitäten informiert. Mithin sind die Anzeige und ein Steuergerät 54 eines Kreditkartenlesegeräts jeweils über Datenleitungen mit der Auswerteeinrichtung 46 verbunden. Um die Anzeige an die Helligkeit im Umfeld der säulenförmigen Gleichstrom-Ladesäule 2 anzupassen, ist im Bereich der Anzeige 52 ein Helligkeitssensor 56 angeordnet, der die Stärke des auf denselben von außerhalb der Gleichstrom-Ladesäule 2 auftretenden Lichts misst und der im Folgenden noch näher erläutert wird.

Überdies sind an die Auswerteeinrichtung 46 über Signalleitungen 58a bzw. 60a zwei Temperatursensoren 58, 60 eines Fluidkreislaufs 62 angeschlossen. Im Fluidkreislauf 62 läuft eine Kühlflüssigkeit 63 um, die die Leiterkabel 30, 32 innerhalb des Ladekabels 10 kühlt. Der Fluidkreislauf 62 wird nachfolgend erläutert.

Der eine Temperatursensor 58 misst eine Kühlflüssigkeitstemperatur an einem Vorlauf 64 des Fluidkreislaufs 62, wohingegen der andere Temperatursensor 60 die Kühlflüssigkeitstemperatur an einem Rücklauf 66 des Fluidkreislaufs 62 misst.

Der Fluidkreislauf 62 umfasst eine Pumpe 68, die die Kühlflüssigkeit 63 in eine Leitung des Vorlaufs 64 einspeist. Die Kühlflüssigkeit 63 wird entlang der beiden Leiterkabel 30, 32 innerhalb des Ladekabels 10 bis hin zur Ladekupplung 8 geführt. Dort kann die Kühlflüssigkeit 63 entweder in die Ladekupplung 8 eingespeist werden oder die Ladekupplung 8 umgehen. Jedenfalls wird die Kühlflüssigkeit 63 von der Ladekupplung 8 zurück entlang der beiden Leiterkabel 30, 32 geleitet und zu einer Leitung des Rücklaufs 66 geführt. Um die Kühlwirkung innerhalb des Ladekabels 10 zu verbessern, kann die Kühlflüssigkeit 63 im Ladekabel 10 wendeiförmig um die beiden Leiterkabel 30, 32 herumgeführt werden.

Vom Rücklauf 66 ausgehend wird die Kühlflüssigkeit 63 durch einen Wärmetauscher 70 zur Pumpe geleitet, die die Kühlflüssigkeit 63 wieder in die Leitung des Vorlaufs 64 fördert. Der Wärmetauscher 70 ist an einen weiteren bzw. externen Kühlkreislauf 72 angeschlossen, der einen Teil der im Ladekabel 10 aufgenommenen Wärmeenergie von der Gleichstrom-Ladesäule 2 weg leitet.

Um mehrere Bauteile zu Baugruppen zusammenzufassen, können die Temperatursensoren 58, 60 des Vor- und Rücklaufs 64 bzw. 66 alternativ unmittelbar an einem eingangsseitigen Anschluss und einem ausgangsseitigen Anschluss des Wärmetauschers 70 angeordnet sein.

An einer beliebigen Stelle des Fluidkreislaufs 62 ist ein Überdruckbehälter 78 vorgesehen, der beispielsweise als Blasenspeicher ausgeführt sein kann und der dafür sorgt, dass Kühlflüssigkeitsverluste ausgeglichen werden und dass die Kühlflüssigkeit 63 stets unter Druck, d.h. Vorlast steht.

Die Temperatur innerhalb des Ladekabels 10 und/oder der Ladekupplung 8 kann auch mittels eines oder mehrerer Temperatursensoren 74 ermittelt werden, die innerhalb des Ladekabels 10 und/oder der Ladekupplung 8 angeordnet sind und ein Signal an die Auswerteeinrichtung 46 übermitteln, das die Temperatur innerhalb des Ladekabels 10 bzw. der Leiterkabel 30, 32 bzw. der Ladekupplung 8 repräsentiert.

Von den Leitern 22, 24 und von den Leiterkabeln 30, 32 wird eine Verlustenergie in Form von Wärme abgegeben. In der Auswerteeinrichtung wird eine Berechnung durchgeführt, um diese Verlustenergie in dem einen Leiter 22 bis zum Übergabepunkt 26 darzustellen.

Eine dazu analoge weitere Berechnung erfolgt auch im Hinblick auf den Widerstand im Ladekabel 10. Dort soll diese ermittelte Energie allerdings nur als eine untere Grenze dienen.

Da das Ladekabel 10 flüssigkeitsgekühlt ist, wird die Temperatur der Kühlflüssigkeit 63 von der Auswerteeinrichtung 46 überwacht. Aus dem bei dieser Überwachung beobachteten Temperaturanstieg und der Abgabe von Wärmeenergie an dem Wärmetauscher 70 am Ladekabel 10 mit einer Vor- und Rücklauftemperatur der Kühlflüssigkeit 63 wird über die spezifische Wärmekapazität der Kühlflüssigkeit 63 die abgeführte Energiemenge berechnet.

Die Auswerteeinrichtung 46 ist ausgebildet, die Verlustenergie an dem einen Leiter 22 und die Verlustenergie an den Leiterkabeln 30, 32 unter Berücksichtigung der beiden Signale zu berechnen und beide Verlustenergien zusammenzufassen. Der andere Leiter 24 wird in die Berechnung einbezogen, da die Verlustenergie an dem anderen Leiter 24 ähnlich hoch ist wie am einen Leiter 22. Überdies wird zur Berechnung der Verlustenergie am anderen Leiter 24 die Spannung zwischen den beiden Leitern 22, 24 von der Spannungsmesseinrichtung 48 erfasst und an die Auswerteeinrichtung 46 ausgegeben.

Nachfolgend wird ein Verfahren zum Laden der Batterie 7 des Kraftfahrzeugs 4 mittels der Gleichstrom-Ladesäule 2 erläutert.

Zum Laden der Batterie 7 wird die am Ende des Ladekabels 10 angeordnete Ladekupplung 8 in die Ladebuchse 12 des Kraftfahrzeugs 4 gesteckt bzw. mit derselben gekuppelt.

Um einen Spannungsüberschlag beim Einstecken der Ladekupplung 8 in die Ladebuchse 12 zu verhindern, ist mindestens ein zeichnerisch nicht näher dargestellter Hochspannungs-Trennschalter vorgesehen, der an einer beliebigen Stelle zwischen der Spannungsversorgung und der Batterie 7 angeordnet sein kann. Das Kraftfahrzeug 4 und die Ladesäule 2 können je einen Hochspannungs-Trennschalter umfassen. Der mindestens eine Hochspannungs-Trennschalter kann von einer Steuereinrichtung 76 geöffnet und geschlossen werden, die über eine Datenleitung mit der Auswerteeinrichtung 46 verbunden ist. Alternativ und/oder zusätzlich kann der mindestens eine Hochspannungs-Trennschalter auch von einem Steuergerät innerhalb des Kraftfahrzeugs 4 geöffnet und geschlossen werden. Die Auswerteeinrichtung 46 kann den Befehl zum Laden bzw. zum Öffnen des mindestens einen Hochspannungs-Trennschalters über eine Taste an der Gleichspannungs-Ladesäule oder durch eine mobile Einrichtung des Benutzers der Gleichspannungs-Ladesäule erhalten. Solche mobilen Einrichtungen sind beispielsweise Smartphones, Smart-Watches, und Wearables.

Im geschlossenen Zustand des mindestens einen Hochspannungs-Trennschalters ist die Batterie 7 über
- die Ladebuchse 12;
- die Ladekupplung 8;
- die beiden Leiterkabel 30, 32 innerhalb des Ladekabels 10; und
- die beiden Leiter 22, 24
   mit der Spannungsversorgung 16 verbunden. Eine Verlustenergie von der Spannungsversorgung 16 zur Ladekupplung 8 wird mittels der Berechnung ermittelt, in der
   - die Temperatur der Kühlflüssigkeit 63 anhand der Signale der Temperatursensoren 58, 60, 74 berücksichtigt wird; und/oder
   - das Signal berücksichtigt wird, das die Spannung an der ersten Spannungsmesseinrichtung 44 repräsentiert und/oder
   - das Signal berücksichtigt wird, das die Spannung an der zweiten Spannungsmesseinrichtung 47 repräsentiert.

Anstatt die Spannung bzw. den Spannungsabfall als elektrische Größe an den Spannungsmesseinrichtungen 44, 47 zu messen, kann als elektrische Größe alternativ auch die Stromstärke in der einen Leitung 22 gemessen werden, zu der ein Nebenschlusswiderstand parallelgeschaltet ist.

Die Berechnung der Verlustenergie mittels der Auswerteeinrichtung 46 erfolgt überdies unter Berücksichtigung des Signals des Innenraumtemperatursensors 50. Dabei gilt tendenziell, dass eine starke Erwärmung des Innenraums 21 während der Zeitspanne des Ladens auf eine hohe Verlustenergie rückschließen lässt.

Jedoch erwärmt sich der Innenraum 21 auch durch die Witterung, insbesondere die Sonneneinstrahlung und/oder die Außentemperatur. Die Erwärmung durch die Sonneneinstrahlung kann die Auswerteeinrichtung 46 mittels des Signals vom Helligkeitssensor 56 berechnen und bei der Berechnung der Verlustenergie berücksichtigen. Insofern stellt der Helligkeitssensor 56 eine Erfassungseinrichtung dar, mit der die Erwärmung des Innenraums 21 während einer Zeitspanne, in der geladen wird, durch die Sonneneinstrahlung und/oder die Außentemperatur erfassbar ist. Überdies kann auch ein Außentemperatursensor vorgesehen sein, der ein Signal liefert, das die Auswerteeinrichtung 46 erfassen kann, um bei der Berechnung der Verlustenergie berücksichtigt zu werden. Dies gilt umso mehr, da auch die Temperatur der Kühlflüssigkeit 63 abhängig von der Außentemperatur und der Sonneneinstrahlung ist.

Das Zwischenkabel 38 bzw. 40 muss nicht unbedingt vorhanden sein. Stattdessen kann das Leiterkabel 30 und/oder 32 auch unmittelbar mit dem jeweiligen Leiterteil 34 oder 36 kontaktiert werden.

## Patentansprüche

1. Gleichstrom-Ladesäule (2) für Kraftfahrzeuge (4), **gekennzeichnet durch**
- einen ersten Leiter (22), der eine leitende Verbindung zwischen einem ersten Stromversorgungsanschluss (18) einer Spannungsversorgung (16) und einem ersten Leiterkabel (30) eines Ladekabels (10) herstellt, einen zweiten Leiter (24), der eine leitende Verbindung zwischen einem zweiten Stromversorgungsanschluss (20) der Spannungsversorgung (16) und einem zweiten Leiterkabel (32) des Ladekabels (10) herstellt, wobei das Ladekabel (10) mittels einer Kühlflüssigkeit (63) kühlbar ist,
- eine Auswerteeinrichtung (46), die ausgebildet ist, mittels eines Sensors (58, 60) ein erstes Signal zu erfassen, das eine Temperatur zumindest eines der beiden Leiterkabel (30, 32) repräsentiert,
- eine Messeinrichtung (44, 47), die ausgebildet ist, ein zweites Signal bereitzustellen, das mittels der Auswerteeinrichtung (46) erfassbar ist und das eine elektrische Größe am ersten Leiter (22) repräsentiert, die auf eine Verlustenergie am ersten Leiter (30) rückschließen lässt,
wobei die Auswerteeinrichtung (46) ausgebildet ist, die Verlustenergie am ersten Leiter (30) und eine Verlustenergie an beiden Leiterkabeln (30, 32) unter Berücksichtigung mindestens dieser Signale zu berechnen und abhängig von beiden Verlustenergien eine Verlustenergie bis zu einer Ladekupplung (8) zu bestimmen.

2. Gleichstrom-Ladesäule nach Anspruch 1,
**dadurch gekennzeichnet, dass**
der Sensor (58, 60) ein Temperatursensor ist, der ausgebildet ist, eine Kühlflüssigkeitstemperatur in einem Vorlauf (64) und/oder einem Rücklauf (66) eines Fluidkreislaufes (62) der Kühlflüssigkeit (63) zu messen.

3. Gleichstrom-Ladesäule nach einem der vorhergehenden Ansprüche,
**dadurch gekennzeichnet, dass**
die beiden Leiter (22, 24) jeweils ein Leiterteil (34, 36) aufweisen, das starrer ist als die Leiterkabel (30, 32) und das als Leiterschiene, Leiterrohr oder Leiterstange insbesondere aus Kupfer ausgeführt ist.

4. Gleichstrom-Ladesäule nach Anspruch 3,
**dadurch gekennzeichnet, dass**
die beiden Leiter (22, 24) jeweils zusätzlich ein Zwischenkabel (38, 40) aufweisen, das eine leitende Verbindung zwischen dem starren Leiterteil (34, 36) einerseits und dem Leiterkabel (30, 32) andererseits herstellt.

5. Gleichstrom-Ladesäule nach einem der vorhergehenden Ansprüche,
**dadurch gekennzeichnet, dass**
die Messeinrichtung (44, 47) einen Widerstand (42) und eine parallel zu demselben geschaltete Spannungsmesseinrichtung (44, 47) aufweist, sodass die elektrische Messgröße von der Spannung gebildet wird, die an dem Widerstand (42) abfällt.

6. Gleichstrom-Ladesäule nach einem der vorhergehenden Ansprüche,
**dadurch gekennzeichnet, dass**
ein unteres Ende des ersten Leiters (22) von dem ersten Stromversorgungsanschluss (18) gebildet wird und dass ein oberes Ende des ersten Leiters (22) von einem Übergabepunkt (26) gebildet wird, an dem der erste Leiter (22) an das erste Leiterkabel (30) angeschlossen ist.

7. Gleichstrom-Ladesäule nach einem der vorhergehenden Ansprüche,
**dadurch gekennzeichnet, dass**
eine Spannungsmesseinrichtung (48) an den beiden Leitern (22, 24) angeschlossen ist und ausgebildet ist, ein Signal bereitzustellen, das die Spannung zwischen den beiden Leitern (22, 24) repräsentiert und das von der Auswerteeinrichtung (46) erfassbar ist.

8. Gleichstrom-Ladesäule nach einem der vorhergehenden Ansprüche,
**dadurch gekennzeichnet, dass**
die beiden Leiter (22, 24) und ein Innenraumtemperatursensor (50) innerhalb eines Außengehäuses (14) der Gleichstrom-Ladesäule (2) angeordnet sind, der Innenraumtemperatursensor (50) ausgebildet ist, ein Signal bereitzustellen, das durch die Auswerteeinrichtung (46) erfassbar ist, und
dass die Auswerteeinrichtung (46) ausgebildet ist, die Verlustenergie unter Berücksichtigung des Signals des Innenraumtemperatursensors (50) zu berechnen.

9. Gleichstrom-Ladesäule nach einem der vorhergehenden Ansprüche,
**dadurch gekennzeichnet, dass**
zumindest ein Temperatursensor (74)
- innerhalb des Ladekabels (10) an zumindest einem der Leiterkabel (30, 32) angeschlossen ist; und
- ausgebildet ist, die Temperatur zumindest eines der Leiterkabel (30, 32) zu messen und ein diese Temperatur repräsentierendes Signal bereitzustellen, und
dass die Auswerteeinrichtung (46) ausgebildet ist, dieses die Temperatur repräsentierende Signal zu erfassen und bei der Berechnung der Verlustenergie zu berücksichtigen.

10. Gleichstrom-Ladesäule nach einem der vorhergehenden Ansprüche,
**dadurch gekennzeichnet, dass**
eine Erfassungseinrichtung vorgesehen ist, mit der die Erwärmung durch die Witterung, insbesondere die Sonneneinstrahlung und/oder die Außentemperatur erfassbar ist und dass die Auswerteeinrichtung (46) ausgestaltet ist, die Verlustenergie unter Berücksichtigung des Signals der Erfassungseinrichtung zu berechnen.

11. Verfahren zum Laden einer Batterie (7) eines Kraftfahrzeugs (4) mittels einer Gleichstrom-Ladesäule (2) insbesondere nach einem der vorhergehenden Ansprüche, **dadurch gekennzeichnet, dass** zum Laden eine Ladekupplung (8) eines Ladekabels (10) der Gleichstrom-Ladesäule (2) mit einer Ladebuchse (12) des Kraftfahrzeugs (4) gekuppelt wird, um die Batterie (7) über
- die Ladekupplung (8);
- Leiterkabel (30, 32) innerhalb des Ladekabels (10); und
- zumindest zwei Leiter (22, 24)
mit einer Spannungsversorgung (16) zu verbinden,
dass eine Verlustenergie von der Spannungsversorgung (16) zur Ladekupplung (8) mittels einer Berechnung ermittelt wird, in der eine elektrische Messgröße einer der Leiter (22, 24) und eine Temperatur einer Kühlflüssigkeit (63) berücksichtigt wird, mit der das Ladekabel (10) gekühlt wird.
